# EUROPÄISCHE PATENTSCHRIFT

(11) **EP 2 424 747 B1**
(45) Veröffentlichungstag und Bekanntmachung des Hinweises auf die Patenterteilung: **06.12.2017**
(21) Anmeldenummer: 10720263.2
(22) Anmeldetag: 29.04.2010
(51) Int. Cl.: B60L 11/18

(54) **ELEKTRISCH ANTREIBBARES KRAFTFAHRZEUG**
ELECTRICALLY DRIVABLE MOTOR VEHICLE
VÉHICULE ÉLECTRIQUE

(30) Priorität: 30.04.2009 DE 102009019531
(43) Veröffentlichungstag der Anmeldung: 07.03.2012
(73) Patentinhaber: Daimler AG, 70327 Stuttgart (DE)
(72) Erfinder: HERGES, Peter, 70469 Stuttgart (DE); HOFMANN, Michael, 84034 Landshut (DE); HUBER, Jörg, 76448 Durmersheim (DE); WEIGEL, Dennis, 70736 Fellbach (DE); WILLIKENS, Axel, 71334 Waiblingen (DE)
(74) Vertreter: JENSEN & SON
(86) Internationale Anmeldenummer: PCT/EP2010/002625
(87) Internationale Veröffentlichungsnummer: WO 2010/124861

(56) Entgegenhaltungen:
- WO-A1-02/066293
- WO-A1-2005/035317
- FR-A1- 2 691 022
- JP-A- 2007 043 795

## Beschreibung

Die vorliegende Erfindung betrifft ein elektrisch antreibbares Kraftfahrzeug gemäß dem Oberbegriff des Patentanspruchs 1. Ferner richtet sich die Erfindung auf ein Verfahren zum Betrieb einer Schaltungsanordnung für ein derartiges Kraftfahrzeug.
Elektrisch antreibbare Kraftfahrzeuge rücken zunehmend in den Fokus des Interesses, wobei jedoch insbesondere die Anordnung und die Ausstattung derartiger Elektrofahrzeuge mit entsprechenden Fahrzeugbatterien Probleme bereiten kann. Bekannt sind dabei elektrisch betriebene Kraftfahrzeuge mit zwei Fahrzeugbatterien, die bei einem entsprechenden Leistungsbedarf zusammen wirken. Eine einfache Parallelschaltung der beiden Fahrzeugbatterien verbietet sich jedoch, da bekannt ist, dass parallel geschaltete Fahrzeugbatterien ein instabiles System darstellen, bei dem es zu Umladungen der Energien, je nach Exemplarstreuung von Leerlaufspannungen kommen kann. Dies ist aus WO2005/035317 bekannt. Eine derartige Situation wird dabei nochmals instabiler, sofern die Leerlaufspannungen mit der Alterung der Batterien bzw. bei Schädigung einer der Fahrzeugbatterien stark wandern.
Gelöst wird dieses Problem bisher durch den Einsatz von sog. DC/DC-Wandlern (Gleichstromsteller), die zwischen den Fahrzeugbatterien geschaltet sind und eine Leerlaufspannung einbringen, die genau die Leerlaufdifferenz aufheben kann, wodurch die Fahrzeugbatterien in einem ersten Schritt gleich belastet werden, auch wenn sie Differenzen in den Leerlaufspannungen aufweisen. Derartige DC/DC-Wandler können durch ihre Gegenspannung auch dann ausgleichend gegensteuern, wenn eine der Fahrzeugbatterien bereits einen tieferen Ladungszustand als eine zweite Fahrzeugbatterie aufweist, wobei in diesem Fall die Gegenspannung des DC/DC-Wandlers durch eine übergeordnete Betriebsstrategie so gesteuert wird, dass die zweite Fahrzeugbatterie jeweils im Teillastbetrieb deutlich stärker belastet wird als die erste Batterie. Hierdurch lässt sich ebenfalls eine Stabilisierung des Gesamtsystems erreichen und die Ladung der beiden Fahrzeugbatterien anpassen. Derartige DC/DC-Wandler sind jedoch vergleichsweise teuer und aufwändig.

Die vorliegende Erfindung beschäftigt sich somit mit dem Problem, für ein elektrisch antreibbares Kraftfahrzeug mit zumindest zwei Fahrzeugbatterien, eine verbesserte oder zumindest eine alternative Ausführungsform anzugeben, die sich insbesondere durch einen anderen Aufbau und verbunden damit, durch deutlich geringere Kosten auszeichnet.

Dieses Problem wird erfindungsgemäß dadurch gelöst, dass die Lastschalter jeweils zwei Leistungszweige aufweisen, welche antiparallel zueinander angeordnet sind. Dadurch kann ein sicherer Lade- und Entladebetrieb einer jeden Fahrzeugbatterie gewährleistet werden. Dies ist gerade bei einem elektrisch angetriebenen Fahrzeug notwendig, um sowohl einen zuverlässigen elektrischen Fahrbetrieb zu gewährleisten als auch die Wiedergewinnung kinetischer Bremsenergie (Rekuperation) in zuverlässiger Art und Weise zu ermöglichen. Vorteilhafte Ausführungsformen sind Gegenstand der abhängigen Ansprüche.

Die vorliegende Erfindung beruht auf dem allgemeinen Gedanken, ein elektrisch antreibbares Kraftfahrzeug mit zumindest zwei parallel schaltbaren Fahrzeugbatterien und einer zugehörigen elektronischen Schaltungsanordnung auszustatten, wobei diese Schaltungsanordnung eine der Anzahl der Fahrzeugbatterien entsprechende Anzahl an elektronischen Lastschaltern aufweist, über welche die Fahrzeugbatterien einzeln oder in beliebiger Kombination, insbesondere zusammen, zu einem elektrischen Verbraucher durchschaltbar sind. Die elektronische Schaltungsanordnung ermöglicht somit einen Ersatz eines anstelle dieser bisher eingesetzten DC/DC-Wandlers, wodurch nicht nur eine erhebliche Kosteneinsparung möglich ist, sondern zugleich auch eine Reduzierung des Gewichts und eine Reduzierung einer elektrischen Verlustleistung, welche bei einem derartigen DC/DC-Wandler bei ca. 3% liegt. Demgegenüber arbeitet die erfindungsgemäße elektronische Schaltungsanordnung nahezu verlustfrei, wodurch ein insgesamt erzielbarer Wirkungsgrad deutlich höher ist, als bei vergleichbaren und aus dem Stand der Technik bekannten Systemen. Mit der erfindungsgemäßen Schaltungsanordnung ist es somit auf einfache und gleichzeitig kostengünstige Weise möglich, mehrere parallel schaltbare Hochvoltbatterien optimal zugänglich zu machen.

In einer Ausführungsform weist wenigstens ein Lastschalter einen dritten Leistungszweig auf, welcher parallel zu den beiden antiparallel zueinander angeordneten Leistungszweigen angeordnet ist. Durch den dritten Leistungszweig ist die Stromtragfähigkeit des wenigstens einen Lastschalters in vorteilhafter Weise erhöht.

In einer Ausgestaltung der Erfindung weisen die beiden antiparallel zueinander angeordneten Leistungszweige jeweils einen IGBT und eine Sperrdiode auf. Somit können die jeweiligen Module geladen und entladen werden, wobei ein unerwünschter und parasitärer Stromfluss zwischen Batteriemodulen mit unterschiedlichen Ladezuständen beziehungsweise Spannungen wirksam vermieden werden kann.

In einer weiteren Ausgestaltung der Erfindung weist der dritte Leistungszweig eine Feldeffekttransistoreinheit auf, welche wenigstens einen Feldeffekttransistor umfasst. Der Feldeffekttransistor ist vorzugsweise als Power-MOSFET oder als MOSFET ausgebildet. Besonders bevorzugt ist der wenigstens eine Feldeffekttransistor als Niederspannungs-MOSFET ausgebildet.

Der Einsatz einer solchen Feldeffekttransistoreinheit kann zu einer deutlichen Reduktion der an den jeweiligen IGBTs anfallenden Verlustleistung führen. Bevorzugt umfasst die Feldeffekttransistoreinheit dabei eine Relaiseinheit, welche wenigstens ein Relais aufweist, welches in Serie zu dem wenigstens einen Feldeffekttransistor angeordnet ist.

Besonders bevorzugt weist die Feldeffekttransistoreinheit mehrere Feldeffekttransistoren auf und die Relaiseinheit weist mehrere Relais auf. Jedes Relais ist über einen Anschluss mit einer der Fahrzeugbatterien elektrisch leitend verbindbar. Jedes Relais ist über einen weiteren Anschluss mit jeweils einem Anschluss eines jeden Feldeffekttransistors elektrisch leitend verbindbar. Jeder Feldeffekttransistor ist über seinen weiteren Anschluss mit dem elektrischen Verbraucher elektrisch leitend verbindbar.

In einer weiteren Ausgestaltung der Erfindung übersteigt die Anzahl der Relais die Anzahl Feldeffekttransistoren. Bevorzugt sind die Fahrzeugbatterien als Hochvolt-Batterien ausgestaltet.

Erfindungsgemäß wird auch ein Verfahren zum Betrieb einer Schaltungsanordnung mit zumindest zwei elektronischen Lastschaltern für ein elektrisch antreibbares Kraftfahrzeug bereitgestellt.

In einer Ausgestaltung des erfindungsgemäßen Verfahrens werden zumindest zwei elektronische Lastschalter durchgeschaltet, wodurch die Innenwiderstände zumindest zweier Fahrzeugbatterien und der elektrische Verbraucher eine Sternschaltung bilden. In dieser Ausgestaltung kann somit die Abgabeleistung zumindest zweier Batterien genutzt werden, um den für einen Hochlastbetrieb erforderliche Leistungsbedarf bereitzustellen. Darüber hinaus kann die Kapazität zumindest zweier Batterien ausgeschöpft werden, um den Hochlastbetrieb für eine ausreichende Dauer zu ermöglichen.

In einer weiteren Ausgestaltung werden im Teillastbetrieb die einzelnen Fahrzeugbatterien über entsprechende Lastschalter wechselweise zu dem elektrischen Verbraucher durchgeschaltet. Somit werden die Fahrzeugbatterien gleichmäßig entladen. Spannungsdifferenzen zwischen den einzelnen Fahrzeugbatterien können somit in vorteilhafter Weise minimiert beziehungsweise ausgeglichen werden.

Bevorzugt erfolgt das Umschalten zwischen Teillastbetrieb und Hochlastbetrieb in Abhängigkeit der Differenz der Leerlaufspannungen zweier Fahrzeugbatterien beziehungsweise in Abhängigkeit der Differenzen der Leerlaufspannungen mehrerer Fahrzeugbatterien. Somit kann beispielsweise verhindert werden, dass die Spannungsdifferenzen unter den Batterien vorbestimmte Grenzwerte übersteigen.

In einer weiteren Ausgestaltung werden die IGBTs der Lastschalter jeweils einer Fahrzeugbatterie, einer Hauptbatterie und zumindest einer Nebenbatterie, zugeordnet. Für einen Zeitraum werden die IGBTs des Lastschalters der Hauptbatterie permanent durchgeschaltet. Die IGBTs des Lastschalters der jeweiligen Nebenbatterie werden bedarfsabhängig durchgeschaltet. Somit ist vorgesehen, dass die für den normalen Fahrbetrieb erforderliche Leistung von der Hauptbatterie bereitgestellt wird. In anderen Betriebssituationen, wie beispielsweise dem Boosten (Beschleunigen) oder dem Rekuperationsbetrieb kann die Leistung und die Kapazität zumindest einer Nebenbatterie zusätzlich genutzt werden.

In einer weiteren Ausgestaltung ist vorgesehen, dass zum Zuschalten der Feldeffekttransistoreinheit zuerst das Relais geschlossen wird und anschließend der Feldeffekttransistor eingeschaltet wird, und dann zum Abschalten der Feldeffekttransistoreinheit zuerst das Relais geöffnet wird und anschließend der Feldeffekttransistor abgeschaltet wird. In einer alternativen Ausgestaltung ist vorgesehen, dass zum Zuschalten der Feldeffekttransistoreinheit zuerst die Relais geschlossen werden und anschließend die Feldeffekttransistoren eingeschaltet werden, und dann zum Abschalten der Feldeffekttransistoreinheit zuerst die Relais geöffnet werden und anschließend die Feldeffekttransistoren abgeschaltet werden. Beim Abschalten kann somit ein unerwünschter Spannungsabfall an den Feldeffekttransistoren vermieden werden. Bevorzugt werden das Zuschalten und/oder das Abschalten der Feldeffekttransistoreinheit während des sicheren Fahrbetriebs des Kraftfahrzeugs durchgeführt.

In einer weiteren Ausgestaltung wird die Feldeffekttransistoreinheit als Reduktionsmittel zur Reduzierung der Temperatur des Lastschalters zugeschaltet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schaltskizze eines erfindungsgemäß elektrisch antreibbaren Kraftfahrzeugs,
- Fig. 2: eine Detaildarstellung einer Schaltungsanordnung mit einzelnen Lastschaltern,
- Fig. 3: eine Detaildarstellung einer Feldeffekttransistorteileinheit zur Reduzierung einer elektrischen Verlustleistung,
- Fig. 4: eine weitere Detaildarstellung einer Schaltungsanordnung mit einzelnen Lastschaltern.

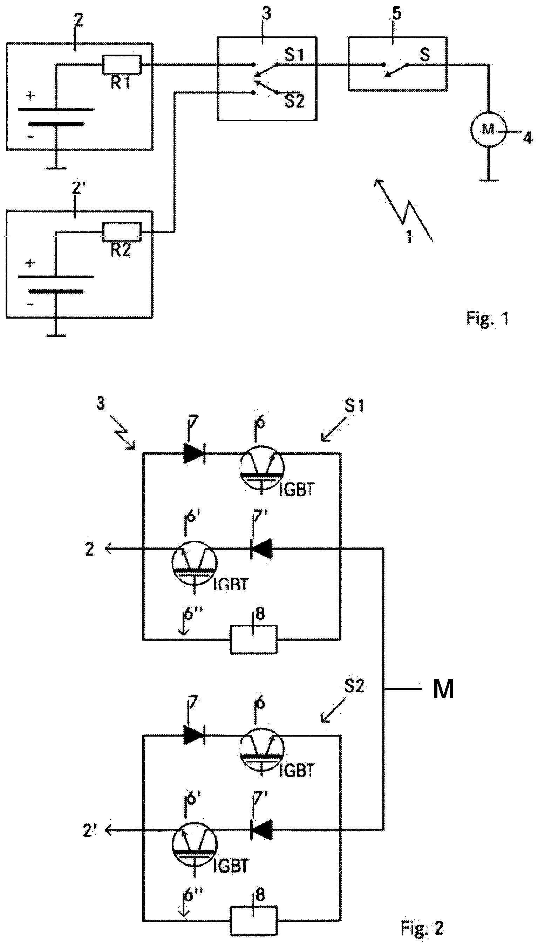

Entsprechend der Fig. 1, weist ein elektrisches System 1 zum Antrieb eines Elektrofahrzeuges zumindest zwei parallel schaltbare Fahrzeugbatterien 2 und 2' sowie eine elektronische Schaltungsanordnung 3 auf, die eine der Anzahl der Fahrzeugbatterien 2, 2' entsprechende Anzahl an elektronischen Lastschaltern S1, S2 umfasst, über die die Fahrzeugbatterien 2, 2' einzeln oder zusammen zu einem elektrischen Verbraucher, bspw. einem elektrischen Antriebsmotor, durchschaltbar sind. Mit R1 und R2 sind dabei die Innenwiderstände der Fahrzeugbatterien 2, 2' bezeichnet, wogegen ein Schalter S eine Endstufe 5 symbolisiert und ein elektrischer Motor M mit dem Bezugszeichen 4 eine variable Last des Antriebes, die sich bspw. durch die Taktung des Schalters S ergibt.

Im Teillastbetrieb wird dabei immer nur eine der beiden Fahrzeugbatterien 2, 2' über den entsprechenden Lastschalter S1, S2 benutzt und zwar derart, das sich die Ladungen der einzelnen Fahrzeugbatterien 2, 2' vorzugsweise gleichmäßig abbauen. Selbstverständlich können dabei entgegen der gemäß der Fig. 1 dargestellten zwei Fahrzeugbatterien 2, 2' auch mehrere angeordnet sein. Im Hochlastbetrieb des elektrisch antreibbaren Fahrzeugs, der in der Regel nur kurzzeitig genutzt wird, werden die beiden Lastschalter S1 und S2 zusammen eingeschaltet, wodurch sich eine Sternschaltung aus den Widerständen R1 und R2 sowie M ergibt. Bei neuen Fahrzeugbatterien 2, 2' sind die Spannungsverhältnisse dabei derart, dass bereits bei 10 bis 20% der maximalen Stromabgabe einer Fahrzeugbatterie 2, 2' kein Strom in die andere Fahrzeugbatterie 2', 2 zurück fließen kann. Bei geschädigten Fahrzeugbatterien 2, 2' sind diese Werte selbstverständlich höher, wobei das elektrische System 1 in jedem Fall ohne Stromrückfluss in die jeweils funktionsfähige Fahrzeugbatterie 2', 2 verbleibt. Wird allerdings eine der Fahrzeugbatterien 2, 2' mit 80% belastet und dabei immer noch nicht eine Leerlaufspannung der zumindest einen weiteren Fahrzeugbatterie 2', 2 unterschritten, so ist diese weitere Fahrzeugbatterie 2', 2 entweder komplett tief entladen oder derart geschädigt, dass sie ausgetauscht werden muss. Ein Umschaltpunkt von Teillast- zum Hochlastbereich wird erfindungsgemäß durch eine entsprechende Betriebsstrategie unter Berücksichtigung einer aktuell erkennbaren Leerlaufdifferenz der beiden Fahrzeugbatterien 2, 2' festgelegt. Generell wird hier und im Folgenden immer von zwei Fahrzeugbatterien 2, 2' gesprochen, wobei selbstverständlich klar ist, das hiervon auch deutlich mehr, bspw. drei oder vier, vorgesehen sein können.

Mit dem elektrischen System 1, d. h. insbesondere mit der elektrischen Schaltungsanordnung 3, können somit ein bisher anstelle der elektrischen Schaltungsanordnung 3 vorgesehener Spannungswandler (DC/DC-Wandler) eingespart und trotzdem die Energieinhalte mehrerer parallel schaltbarer Hochvoltfahrzeugbatterien 2, 2' optimal zugänglich gemacht werden. Gemäß der Fig. 1 ist dabei noch im Bereich des Schalters S die Endstufe 5 dargestellt, welche ggf. entfallen kann.

Gemäß der Fig. 2 ist die erfindungsgemäße Schaltungsanordnung 3 mit den beiden Lastschaltern S1 und S2 dargestellt, die jeweils aus zwei antiparallel liegenden Leistungszweigen 6 und 6' mit jeweils integrierten IGBTs (insulated gate bipolar transistor) und einer zugehörigen Sperrdiode 7, 7' aufgebaut sind.

Somit ist eine erste Fahrzeugbatterie 2 mit einer ersten Anode einer ersten Sperrdiode 7 elektrisch leitend verbindbar. Eine erste Kathode der ersten Sperrdiode 7 ist an einen ersten Kollektor des ersten IGBTs 6 angeschlossen. Ein erster Emitter des ersten IGBTs 6 ist mit dem elektrischen Verbraucher M, 4 elektrisch leitend verbindbar.

Des Weiteren ist der elektrische Verbraucher M, 4 mit einer zweiten Anode einer zweiten Sperrdiode 7 elektrisch leitend verbindbar. Eine zweite Kathode der zweiten Sperrdiode 7 ist an einen zweiten Kollektor des zweiten IGBTs 6' angeschlossen. Ein zweiter Emitter des zweiten IGBTs 6' ist mit der ersten Fahrzeugbatterie 2 elektrisch leitend verbindbar.

Eine zweite Fahrzeugbatterie 2' ist mit einer dritten Anode einer dritten Sperrdiode 7 elektrisch leitend verbindbar, wobei eine dritte Kathode der dritten Sperrdiode 7 an einen dritten Kollektor des dritten IGBTs 6 angeschlossen ist, und wobei ein dritter Emitter des dritten IGBTs 6 mit dem elektrischen Verbraucher M, 4 elektrisch leitend verbindbar ist.

Darüber hinaus ist der elektrische Verbraucher M, 4 mit einer vierten Anode einer vierten Sperrdiode 7' elektrisch leitend verbindbar. Eine vierte Kathode der vierten Sperrdiode 7' ist an einen vierten Kollektor des vierten IGBTs 6' angeschlossen. Der vierte Emitter des vierten IGBTs 6' ist mit der zweiten Fahrzeugbatterie 2' elektrisch leitend verbindbar.

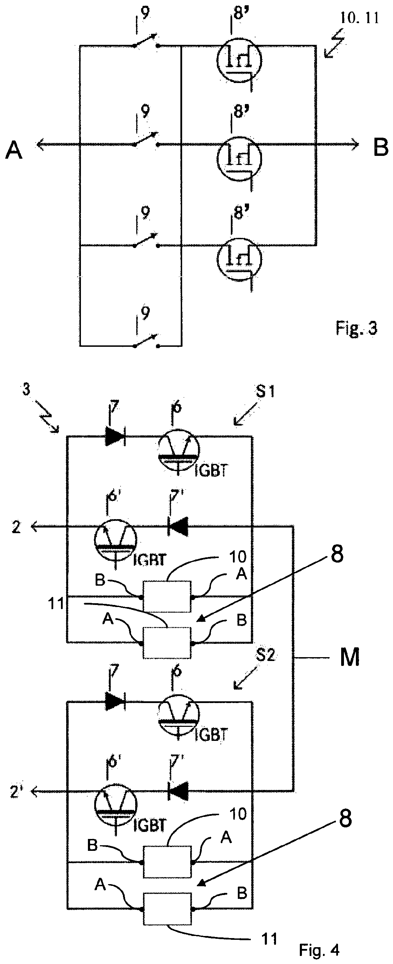

Vorteilhafterweise liegt dabei in einem weiteren, dritten parallelen Leistungszweig 6" eine Feldeffekttransistoreinheit 8. Die in den beiden Leistungszweigen 6 und 6' antiparallel angeordneten IGBTs ermöglichen eine Leistungsentnahme sowie gleichzeitig eine Rekuperation, d.h. eine Aufladung, der Fahrzeugbatterien 2, 2'. Die ebenfalls antiparallelen Sperrdioden 7, 7' verhindern dabei parasitäre Ströme von einer Fahrzeugbatterie 2 zur anderen Fahrzeugbatterie 2'. Ist einer der beiden Leistungszweige 6, 6' durchgeschaltet, liegend an dem jeweiligen IGBT typischerweise noch ca. 5V Spannung an. Die damit verbundene Verlustleistung kann durch Schalten der Feldeffekttransistoreinheit 8 weiter reduziert werden, wobei eine Feldeffekttransistorteileinheit 10, 11 bspw. gemäß der Fig. 3 detailliert dargestellt ist. Ein einzelner Power-MOSFET 8' hat üblicherweise noch einen Widerstand von ca. 2 mOhm.

Durch eine parallele Schaltung mehrerer MOSFETs 8', wie dies bspw. gemäß der Abbildung 3 gezeigt ist, kann der Schaltungswiderstand weiter reduziert werden. Ebenfalls der Fig. 3 ist dabei zu entnehmen, dass in Serie zu den einzelnen Power-MOSFETs 8' Relais 9 liegen, wodurch einerseits ein lastfreies Schalten der Relais 9 und andererseits eine Verwendung von niederohmigen Niederspannungs-MOSFETs ermöglicht wird.

In der gemäß der Figur 3 gezeigten Detaildarstellung einer Feldeffekttransistorteileinheit 10, 11 sind die Relais 9 eingangsseitig mit einem ersten Knotenpunkt A elektrisch leitend verbindbar. Die MOSFETs 8' weisen jeweils einer ersten Anschluss, welcher insbesondere als Drain-Anschluss ausgebildet ist auf. Ferner weisen die MOSFETs 8' jeweils einen zweiten Anschluss, welcher insbesondere als Source-Anschluss ausgestaltet ist, auf. Weiterhin weisen die MOSFETs 8' jeweils einen dritten Anschluss, welcher insbesondere als Gate-Anschluss ausgebildet ist, auf. Die Relais 9 sind ausgangsseitig an den ersten Anschlüssen der MOSFETs 8' angeschlossen. Die zweiten Anschlüsse der MOSFETs 8' sind mit einem zweiten Knotenpunkt B elektrisch leitend verbindbar.

Figur 4 zeigt eine Detaildarstellung der in Figur 2 dargestellten Schaltungsanordnung mit einzelnen Lastschaltern S1, S2. Die in Figur 4 dargestellte Schaltungsanordnung zeigt insbesondere für jeden Lastschalter S1, S2 eine Detaildarstellung der in Figur 2 bereits dargestellten Feldeffekttransistoreinheit 8.

Für jeden Lastschalter S1, S2 weist jede Feldeffekttransistoreinheit 8 mehrere, insbesondere zwei, Feldeffekttransistorteileinheiten 10, 11 auf, welche jeweils nach der in Figur 3 dargestellten Art ausgebildet sein können.

Die erste Feldeffekttransistorteileinheit 10 ist dabei über den zweiten Knotenpunkt B mit einer der Fahrzeugbatterien 2, 2' elektrisch leitend verbindbar. Weiterhin ist die erste Feldeffekttransistorteileinheit 10 über den ersten Knotenpunkt A mit dem elektrischen Verbraucher M, 4 elektrisch leitend verbindbar. Somit ist die erste Feldeffekttransistorteileinheit 10 parallel zu dem - aus der Sperrdiode 7 und dem im Leistungszweig 6 angeordneten IGBT dargestellten - Strompfad für einen Fahrbetrieb schaltbar. Mit der ersten Feldeffekttransistorteileinheit 10 ist die Verlustleistung der Schaltungsanordnung 3 während des Fahrbetriebs minimierbar.

Die zweite Feldeffekttransistorteileinheit 11 ist über den zweiten Knotenpunkt B mit dem elektrischen Verbraucher M, 4 elektrisch leitend verbindbar. Ferner ist die zweite Feldeffekttransistorteileinheit 11 über den ersten Knotenpunkt A mit einer der Fahrzeugbatterien 2, 2' elektrisch leitend verbindbar. Somit ist die zweite Feldeffekttransistorteileinheit 11 parallel zu dem - aus der Sperrdiode 7' und dem im Leistungszweig 6' angeordneten IGBT dargestellten - Strompfad für einen Rekuperationsbetrieb schaltbar. Mit dieser zweiten Feldeffekttransistorteileinheit 11 ist die Verlustleistung der Schaltungsanordnung 3 während des Rekuperationsbetriebs minimierbar.

Der gemäß der Fig. 2 dargestellten Schaltungsanordnung 3 liegt dabei die Aufgabe zugrunde, einen elektronischen Schalter für große Ströme (typischerweise 100 Ampere) zu entwickeln, der in beide Richtungen sperrbar ist. Dies bedeutet, dass ein geöffneter Lastschalter S1, S2 sowohl sperren muss, wenn die Spannung am Punkt "Fahrzeugbatterie 2" größer ist als am Punkt "M", als auch, wenn die Spannung an der Fahrzeugbatterie 2 kleiner ist als am Punkt "M". Hierzu sind normale elektronische Schalter nicht in der Lage. Mittels der Sperrdioden 7, 7' können unerwünschte elektrische Ströme gesperrt werden, wobei bspw. die Sperrdiode 7 und die im Leistungszweig 6 angeordnete IGBT den Strompfad für einen Fahrbetrieb darstellen, während die Sperrdiode 7' und der im Leistungszweig 6' angeordnete IGBT einen Strompfad für einen Rekuperationsbetrieb des Lastschalters S1 darstellen. Bei einer derartigen Anordnung gibt es für den Lastschalter S1 insgesamt keine parasitären Dioden mehr, da die vergleichbaren Sperrdioden 7, 7' im Lastschalter S2 sowie die zugehörigen IGBTs den Lastschalter S2 bilden.

Eine erfindungsgemäße Betriebsstrategie besteht nun darin, dass für eine geraume Zeit, bspw. für 20 Minuten, nur mit Hilfe einer einzigen Fahrzeugbatterie 2, 2' gefahren wird (aktuelle Hauptbatterie) und die andere Fahrzeugbatterie 2', 2 nur zum Boosten bzw. zum starken Bremsen kurzzeitig hinzugezogen wird (aktuelle Nebenbatterie). Bei der jeweiligen Hauptbatterie werden hierbei entsprechend einer Betriebsstrategie beide zugeordneten IGBTs dauerhaft durchgeschaltet, während die IGBTs der jeweiligen Nebenbatterie nur bei Bedarf eingeschaltet werden. Eine elektrische Verlustleistung der gemäß der Fig. 2 dargestellten Schaltungsanordnung 3 beträgt ca. 100 Ampere, in Summe also ca. 700 Watt. Das liegt daran, dass der Spannungsabfall in der Schaltungsanordnung 3 ca. 3,5V und der Strom insgesamt 200 Ampere beträgt. Durch den Einsatz der beiden Feldeffekttransistoreinheiten 8 reduziert sich dabei die Verlustleistung auf unter 100 Watt.

Gemäß der Fig. 3 ist eine Feldeffekttransistorteileinheit 10, 11 aus Power-MOSFETs 8' und zugehörigen Relais 9 geschaltet, wobei üblicherweise parallel geschaltete Power-MOSFETs 8' für niedrige Spannungen (40 V) mit Innenwiderständen von typischerweise 2 mOhm und parallel geschalteten Relais 9 verwendet werden. Gemäß der Figur 3 kann die Anzahl der parallel zueinander angeordneten Relais 9, die Anzahl der parallel zueinander angeordneten MOSFETs 8' übersteigen. Zum Einschalten der gemäß der Fig. 3 dargestellten Feldeffekttransistorteileinheit muss sich dabei das elektrisch antreibbare Kraftfahrzeug stabil im Fahrbetrieb befinden und die einzelnen Power-MOSFETs 8' müssen jeweils geöffnet sein. In diesem Zustand werden zunächst die einzelnen Relais 9 lastfrei geschaltet und solange abgewartet (bspw. 100 msec) bis alle Laufzeitunterschiede der einzelnen Relais 9 bedeutungslos geworden sind. Lastfreie Relais 9 kann man dabei extrem häufig und praktisch verschleißfrei schalten. Außerdem verhalten sich parallel geschaltete Relais 9 gutmütig gegenüber Exemplarstreuung, wenn sie einmal verschleißfrei geschaltet worden sind.

In einem zweiten Schritt werden dann die Power-MOSFETs 8' (Feldeffekttransistoren) geschaltet. Da diese Power-MOSFETs 8' im Nulldurchgang Ohmsche Widerstände bilden, verhalten sie sich ebenfalls gutmütig gegenüber Exemplarstreuungen. Sind die Power-MOSFETs 8' erst einmal geschaltet, so können sie als Ohmsche Widerstände auch Rekuperationsströme in gleicher Höhe und mit gleich gutem Wirkungsgrad leiten. Die Power-MOSFETs 8' (Feldeffekttransistoren) können aber im Rekuperationsbetrieb nicht geöffnet werden, hierzu muss stets ein Fahrbetrieb abgewartet werden. Die Öffnung der Power-MOSFETs 8' und der Relais 9 geschieht beim Öffnen in umgekehrter Reihenfolge wie beim Schließen. Durch dieses Verfahren der Trennung der Spannung durch Relais 9 können die Power-MOSFETs 8' für niedrigere Spannungen (z. B. 40V) verwendet werden, denn nur bei diesen gibt es heute bereits Bautypen mit niedrigen Innenwiderständen von bspw. 2 Milliohm.

Denkbar ist auch eine erweiterte Betriebsstrategie bei Volllast und bei Missbrauch. Bei aggressiver Fahrweise könnten bspw. die IGBTs der jeweiligen Nebenbatterie den zugehörigen Lastschalter S1 aufheizen, wobei in diesem Fall die Betriebsstrategie darin besteht, dass fahrsituationsbezogen auch die Power-MOSFETs 8' der Nebenbatterie zugeschaltet werden. Dies führt zu einer sofortigen, deutlichen Reduzierung der Verlustleistung, woraufhin die Temperatur der Schaltungsanordnung 3 wieder fällt. Für gewisse Zeiträume müssen in diesem Notfall erhöhte Schaltspiele der Relais 9 in Kauf genommen werden, wobei die Schaltungsanordnung 9 mit dieser Strategie jedoch die Fahrsituation sicher beherrschen und die erhöhten Relais-Schaltspiele lediglich ein geringfügiges Geräuschproblem darstellen.

## Patentansprüche

1. Elektrisch antreibbares Kraftfahrzeug mit zumindest zwei parallel schaltbaren Fahrzeugbatterien (2,2') und mit einer elektronischen Schaltungsanordnung (3), die eine den der Anzahl der Fahrzeugbatterien (2,2') entsprechende Anzahl an elektronischen Lastschaltern (S1,S2) aufweist, über die die Fahrzeugbatterien (2,2') einzeln oder zusammen zu einem elektrischen Verbraucher (4) durchschaltbar sind, wobei die Lastschalter (S1,S2) jeweils zwei Leistungszweige (6,6') aufweisen, welche antiparallel zueinander angeordnet sind, wobei wenigstens einer der Lastschalter (S1,S2) einen dritten Leistungszweig (6") aufweist, welcher parallel zu den beiden antiparallel zueinander angeordneten Leistungszweigen (6,6') angeordnet ist,
**dadurch gekennzeichnet, dass**
der dritte Leistungszweig (6") eine Feldeffekttransistoreinheit (8) aufweist, welche eine Relaiseinheit umfasst, und wobei die Feldeffekttransistoreinheit (8) mehrere Feldeffekttransistoren (8') aufweist und die Relaiseinheit mehrere Relais (9) aufweist, wobei jedes Relais (9) über einen Anschluss mit einer der Fahrzeugbatterien (2,2') elektrisch leitend verbindbar ist und jedes Relais (9) über einen weiteren Anschluss mit jeweils einem Anschluss eines jeden Feldeffekttransistors (8') elektrisch leitend verbindbar ist, und wobei jeder Feldeffekttransistor über seinen weiteren Anschluss mit dem elektrischen Verbraucher (M,4) elektrisch leitend verbindbar ist.

2. Elektrisch antreibbares Kraftfahrzeug nach Anspruch 1,
**dadurch gekennzeichnet, dass**
die beiden antiparallel zueinander angeordneten Leistungszweige (6,6') jeweils einen IGBT (6,6') und eine Sperrdiode (7,7') aufweisen.

3. Elektrisch antreibbares Kraftfahrzeug nach Anspruch 1 oder 2,
**dadurch gekennzeichnet, dass**
jeder Lastschalter (S1,S2) jeweils den dritten Leistungszweig (6") aufweist.

4. Verfahren zum Betrieb einer Schaltungsanordnung (3) mit zumindest zwei elektronischen Lastschaltern (S1,S2) für ein elektrisch antreibbares Kraftfahrzeug, über welche zumindest zwei parallel schaltbare Fahrzeugbatterien (2,2') einzeln oder zusammen zu einem elektrischen Verbraucher (4) durchgeschaltet werden, wobei im Hochlastbetrieb zumindest zwei elektronische Lastschalter (S1,S2) durchgeschaltet werden, wodurch die Innenwiderstände (R1,R2) zumindest zweier Fahrzeugbatterien (2,2') und der elektrische Verbraucher (M,4) eine Sternschaltung bilden,
**dadurch gekennzeichnet, dass**
zum Zuschalten einer Feldeffekttransistoreinheit (8) des jeweiligen Lastschalters (S1,S2) zuerst die Relais (9) der Feldeffekttransistoreinheit (8) geschlossen werden und anschließend die Feldeffekttransistoren (8') der Feldeffekttransistoreinheit (8) eingeschaltet werden.

5. Verfahren zum Betrieb einer Schaltungsanordnung (3) nach Anspruch 4,
**dadurch gekennzeichnet, dass**
zum Abschalten der Feldeffekttransistoreinheit (8) des jeweiligen Lastschalters (S1,S2) zuerst die Relais (9) der Feldeffekttransistoreinheit (8) geöffnet werden und anschließend die Feldeffekttransistoren (8') der Feldeffekttransistoreinheit (8) abgeschaltet werden, und dass das Zuschalten und/oder das Abschalten der Feldeffekttransistoreinheit (8) während des Fahrbetriebs des Kraftfahrzeugs durchgeführt wird.

6. Verfahren zum Betrieb einer Schaltungsanordnung (3) nach Anspruch 4 oder 5,
**dadurch gekennzeichnet, dass**
im Teillastbetrieb die einzelnen Fahrzeugbatterien (2,2') über entsprechende Lastschalter (S1,S2) wechselweise zu dem elektrischen Verbraucher (4) durchgeschaltet werden, wodurch die Fahrzeugbatterien (2,2') gleichmäßig entladen werden.

7. Verfahren zum Betrieb einer Schaltungsanordnung (3) nach Anspruch 6,
**dadurch gekennzeichnet, dass**
ein Umschalten zwischen Teillastbetrieb und Hochlastbetrieb in Abhängigkeit der Differenz / der Differenzen der Leerlaufspannungen der Fahrzeugbatterien (2,2') untereinander erfolgt.

8. Verfahren zum Betrieb einer Schaltungsanordnung (3) nach einem der vorhergehenden Ansprüche 4 bis 7,
**dadurch gekennzeichnet, dass**
die IGBTs (6,6') der Lastschalter (S1,S2) jeweils einer Fahrzeugbatterie (2,2') - eine Hauptbatterie und zumindest eine Nebenbatterie - zugeordnet werden, wobei für einen Zeitraum die IGBTs (6,6') des Lastschalters der Hauptbatterie permanent durchgeschaltet werden und die IGBTs (6,6') des Lastschalters der jeweiligen Nebenbatterie bedarfsabhängig durchgeschaltet werden.

9. Verfahren zum Betrieb einer Schaltungsanordnung (3) nach einem der vorhergehenden Ansprüche 4 bis 8,
**dadurch gekennzeichnet, dass**
die Feldeffekttransistoreinheit (8) als Reduktionsmittel zur Reduzierung der Temperatur eines Lastschalters (1,2) zugeschaltet wird.

## Claims

1. Electrically drivable motor vehicle having at least two vehicle batteries (2, 2') that can be connected in parallel and having an electronic circuit arrangement (3), which has a number of electronic load switches (S1, S2) corresponding to the number of vehicle batteries (2, 2'), wherein via the electronic load switches (S1, S2) the vehicle batteries (2, 2') can be switched through, individually or together, to an electrical load (4), wherein the load switches (S1, S2) each have two power branches (6, 6'), which are arranged antiparallel to each other, wherein at least one of the load switches (S1, S2) has a third power branch (6"), which is arranged parallel to the two power branches (6, 6') arranged antiparallel to each other,
**characterised in that**
the third power branch (6") has a field effect transistor unit (8), which includes a relay unit, and wherein the field effect transistor unit (8) has a plurality of field effect transistors (8') and the relay unit has a plurality of relays (9), wherein each relay (9) can be electrically conductively connected, via a terminal connection, to one of the vehicle batteries (2, 2'), and each relay (9) can be electrically conductively connected, via a further terminal connection, to a respective terminal connection of a given field effect transistor (8'), and wherein each field effect transistor can be electrically conductively connected, via its further terminal connection, to the electrical load (M, 4).

2. Electrically drivable motor vehicle according to claim 1,
**characterised in that**
the two power branches (6, 6') arranged antiparallel to each other each have an IGBT (6, 6') and a blocking diode (7, 7').

3. Electrically drivable motor vehicle according to claim 1 or 2,
**characterised in that**
each load switch (S1, S2) respectively has the third power branch (6").

4. Method for operating a circuit arrangement (3) having at least two electronic load switches (S1, S2) for an electrically drivable motor vehicle, via which at least two vehicle batteries (2, 2') that can be connected in parallel are switched through, individually or together, to an electrical load (4), wherein at least two electronic load switches (S1, S2) are switched through in full-load operation, whereby the internal resistances (R1, R2) of at least two vehicle batteries (2, 2') and the electrical load (M, 4) form a star circuit,
**characterised in that**
to connect a field effect transistor unit (8) of the respective load switch (S1, S2), firstly the relays (9) of the field effect transistor unit (8) are closed and then the field effect transistors (8') of the field effect transistor unit (8) are switched on.

5. Method for operating a circuit arrangement (3) according to claim 4,
**characterised in that**
to switch off the field effect transistor unit (8) of the respective load switch (S1, S2), firstly the relays (9) of the field effect transistor unit (8) are opened and then the field effect transistors (8') of the field effect transistor unit (8) are switched off, and the switch-on and / or the switch-off of the field effect transistor unit (8) is / are carried out during the driving operation of the motor vehicle.

6. Method for operating a circuit arrangement (3) according to claim 4 or 5,
**characterised in that**
in partial-load operation the individual vehicle batteries (2, 2') are switched through, via corresponding load switches (S1, S2), alternately to the electrical load (4), whereby the vehicle batteries (2, 2') are discharged uniformly.

7. Method for operating a circuit arrangement (3) according to claim 6,
**characterised in that**
switching between partial-load operation and full-load operation is realised in dependence on the difference(s) in the open circuit voltages of the vehicle batteries (2, 2') between themselves.

8. Method for operating a circuit arrangement (3) according to one of the preceding claims 4 to 7,
**characterised in that**
the IGBTs (6, 6') of the load switches (S1, S2) are each assigned to a vehicle battery (2, 2') - a main battery and at least one secondary battery -, wherein for a period of time the IGBTs (6, 6') of the load switch of the main battery are permanently switched through and the IGBTs (6, 6') of the load switch of the respective secondary battery are switched through on demand.

9. Method for operating a circuit arrangement (3) according to one of the preceding claims 4 to 8,
**characterised in that**
the field effect transistor unit (8) is connected as a reducing means to reduce the temperature of a load switch (1, 2).

## Revendications

1. Véhicule électrique équipé d'au moins deux batteries (2, 2') de véhicule commutables en parallèle et d'un ensemble de circuits électroniques (3) qui présente un certain nombre de batteries (2, 2') de véhicule correspondant au nombre d'interrupteurs (S1, S2) de charge électroniques, qui permettent de commuter transversalement les batteries (2, 2') de véhicule individuellement ou ensemble à un consommateur électrique (4), les interrupteurs (S1, S2) de charge présentant respectivement deux branches (6, 6') de puissance qui sont disposées en parallèle inverse l'un par rapport à l'autre, au moins l'un des interrupteurs (S1, S2) de charge présentant une troisième branche (6") de puissance, qui est disposée en parallèle aux deux branches (6, 6') de puissance disposées anti-parallèle l'une par rapport à l'autre, **caractérisé en ce que** la troisième branche (6") de puissance présente une unité (8) de transistors à effet de champ, qui comprend une unité de relais et l'unité (8) de transistors à effet de champ présentant plusieurs transistors (8') à effet de champ et l'unité de relais présentant plusieurs relais (9), chaque relais (9) pouvant être raccordé électriquement par un raccordement à l'une des batteries (2, 2') de véhicule et chaque relais (9) pouvant être raccordé électriquement par un autre raccordement à un raccordement respectif de chaque transistor (8') à effet de champ, et chaque transistor à effet de champ pouvant être raccordé électriquement au moyen de son autre raccordement au consommateur électrique (M, 4).

2. Véhicule électrique selon la revendication 1, **caractérisée en ce que** les deux branches (6, 6') de puissance disposées anti-parallèle l'une par rapport à l'autre présentent respectivement un transistor bipolaire à grille isolée (6, 6') et une diode de blocage (7, 7').

3. Véhicule électrique selon la revendication 1 ou la revendication 2, **caractérisée en ce que** chaque interrupteur (S1, S2) de charge présente respectivement la troisième branche (6") de puissance.

4. Procédé de fonctionnement d'un ensemble de circuits (3) comprenant au moins deux interrupteurs (S1, S2) de charge électroniques pour un véhicule électrique, permettant de commuter transversalement au moins deux batteries de véhicule commutables en parallèle individuellement ou ensemble à un consommateur électrique (4), en mode haute charge au moins deux interrupteurs (S1, S2) de puissance étant commutés transversalement, les résistances internes (R1, R2) d'au moins deux batteries (2, 2') de véhicule et du consommateur électrique (M, 4) formant ainsi une connexion en étoile, **caractérisé en ce que** pour raccorder une unité (8) de transistors à effet de champ de chaque interrupteur (S1, S2) de puissance, les relais (9) de l'unité (8) de transistors à effet de champ sont d'abord fermés et ensuite les transistors (8') à effet de champ de l'unité (8) de transistors à effet de champ sont branchés.

5. Procédé de fonctionnement d'un ensemble de circuits (3) selon la revendication 4, **caractérisé en ce que** pour débrancher l'unité (8) de transistors à effet de champ de chaque interrupteur (S1, S2) de charge, les relais (9) de l'unité (8) de transistors à effet de champ sont d'abord ouverts et ensuite les transistors à effet de champ (8') de l'unité (8) de transistors à effet de champ sont débranchés, et **en ce que** le branchement et/ou le débranchement de l'unité (8) de transistors à effet de champ est réalisé pendant le fonctionnement du véhicule automobile.

6. Procédé de fonctionnement d'un ensemble de circuits (3) selon la revendication 4 ou la revendication 5, **caractérisé en ce qu'**en mode de charge partielle chacune des batteries (2, 2') de véhicule sont commutées transversalement au moyen d'interrupteurs (S1, S2) de charge correspondants alternativement au consommateur électrique (4), les batteries (2, 2') de véhicule étant déchargées de manière régulière.

7. Procédé de fonctionnement d'un ensemble de circuits (3) selon la revendication 6, **caractérisé en ce qu'**un passage d'un mode de charge partielle à un mode de haute charge s'effectue en fonction de la différence / des différences des tensions en circuit ouvert des batteries (2, 2') de véhicule.

8. Procédé de fonctionnement d'un ensemble de circuits (3) selon l'une quelconque des revendications précédentes 4 à 7, **caractérisé en ce que** les transistors bipolaires à grille isolée (6, 6') des interrupteurs (S1, S2) de charge d'une batterie (2, 2') de véhicule respectivement sont associés à une batterie principale et au moins à une batterie auxiliaire, pour une certaine durée les transistors bipolaires à grille isolée (6, 6') de l'interrupteur de charge de la batterie principale étant branchés en permanence et les transistors bipolaires à grille isolée (6, 6') de l'interrupteur de charge de la batterie auxiliaire respective étant branchés en fonction des besoins.

9. Procédé de fonctionnement d'un ensemble de circuits (3) selon l'une quelconque des revendications précédentes 4 à 8, **caractérisé en ce que** l'unité (8) de transistors à effet de champ est branchée en tant que moyen de réduction destiné à réduire la température d'un interrupteur (1, 2) de charge.
